# DEMANDE DE BREVET EUROPEEN

(11) **EP 0 559 526 A1**
(43) Date de publication de la demande: **08.09.1993**
(21) Numéro de dépôt: 93400488.8
(22) Date de dépôt: 25.02.1993
(51) Int. Cl.: H02H 7/122, H02H 7/09

(54) **Dispositif de contrôle de phases d'un moteur triphasé commandé par un variateur électronique**

(30) Priorité: 02.03.1992 FR 9202748
(71) Demandeur: AUTOMOBILES PEUGEOT, F-75116 Paris (FR); AUTOMOBILES CITROEN, F-92200 Neuilly sur Seine (FR)
(72) Inventeur: Palozzi, Ferdinando, F-95130 Franconville (FR); Leviedin, David, F-92250 la Garenne Colombes (FR)
(74) Mandataire: Fabien, Henri

(57) **Abrégé**

La présente invention a pour objet un dispositif de contrôle de phases d'un moteur triphasé commandé par un variateur électronique.

Selon l'invention, ce dispositif comprend :
- sur chaque phase un capteur (5) fournissant un signal fonction du bruit du courant de la phase et un comparateur à seuil (16) recevant ce signal
- une porte logique (17) fournissant un signal d'erreur lorsque le signal de sortie de l'un des comparateurs (16) présente un défaut
- et un relais de commande (18) actionné par cette porte logique.

## Description

On peut régler la vitesse d'un moteur triphasé à l'aide d'un variateur électronique. Un tel variateur comprend un hacheur et un onduleur qui fournissent, grâce à un ensemble de transistors et/ou de thyristors, trois séries d'impulsions dont les phases sont décalées de 120° l'une par rapport à l'autre et dont les largeurs varient en fonction de la vitesse désirée pour le moteur. Mais le signal obtenu n'est pas pur; il est associé à du bruit c'est-à-dire des harmoniques de faibles amplitudes. Les commutations de l'onduleur sont gérées par un circuit M.L.I. (Modulation de Largeur de l'Impulsion) qui a une fréquence de découpage différente de la fréquence des courants de phase et dont le signal hacheur provoque les commutations des transistors de l'étage de puissance du variateur.

Ce signal périodique ou "bruit" de commutation des transistors est présent sur les trois phases lorsque le dispositif ne présente pas d'anomalies et ce même si le moteur est arrêté.

Il peut arriver que sur une phase l'étage de puissance du variateur tombe en panne ou qu'il se produise un défaut de connexion entre le variateur et le moteur. Il est nécessaire que ce défaut soit immédiatement détecté pour éviter tout accident. Les solutions connues jusqu'à présent ne donnent pas satisfaction. En particulier, on ne peut pas se contenter de mesurer le courant sur les trois phases; en effet, si le moteur est bloqué, volontairement par l'exploitant, le courant continuera de passer dans deux des phases, même si un défaut s'est produit dans la troisième phase.

Le dispositif objet de l'invention pallie cet inconvénient et permet de détecter la coupure de l'une des phases en détectant la présence ou non du bruit résultant du signal périodique de commutation des transistors.

Le dispositif de contrôle de phase selon l'invention est caractérisé en ce qu'il comprend :
- sur chaque phase un capteur fournissant un signal du bruit du courant de la phase et un comparateur à seuil recevant ce signal
- une porte logique fournissant un signal d'erreur lorsque le signal de sortie de l'un des comparateurs présente un défaut
- et un relais de commande actionné par cette porte logique.

On a décrit ci-après, à titre d'exemple non limitatif, un mode de réalisation du dispositif selon l'invention, avec référence au dessin annexé dans lequel :
La Figure 1 est un schéma du dispositif;
La Figure 2 est un schéma plus détaillé d'une partie de ce dispositif.

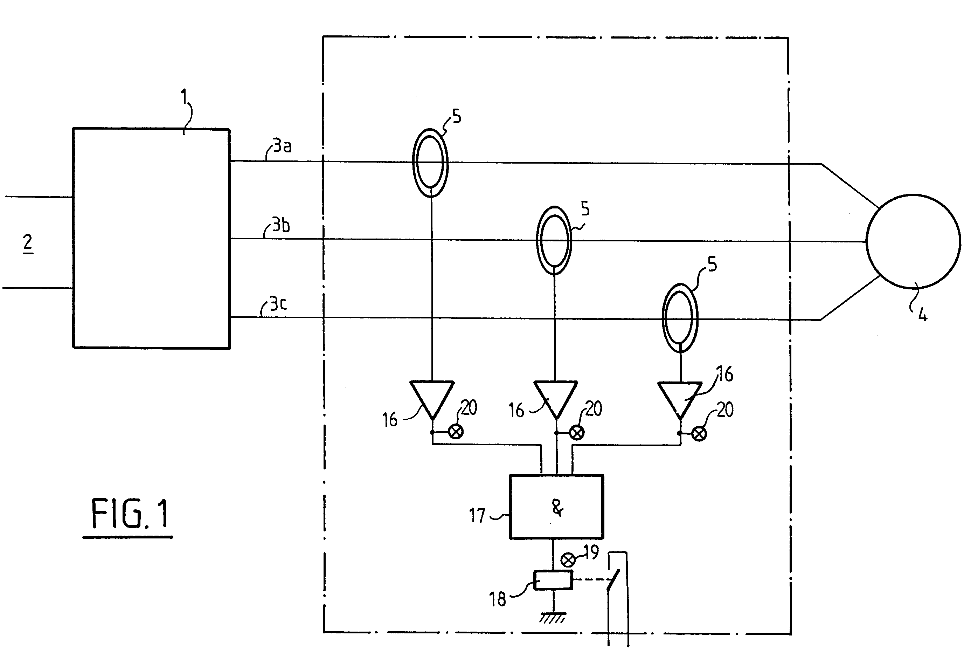

A la Figure 1 on voit un variateur électronique 1 qui est connecté en 2 à une source de courant alternatif et par trois conducteurs 3a, 3b et 3c à un moteur triphasé 4.

Le dispositif de contrôle selon l'invention est interposé entre le variateur 1 et le moteur 4.

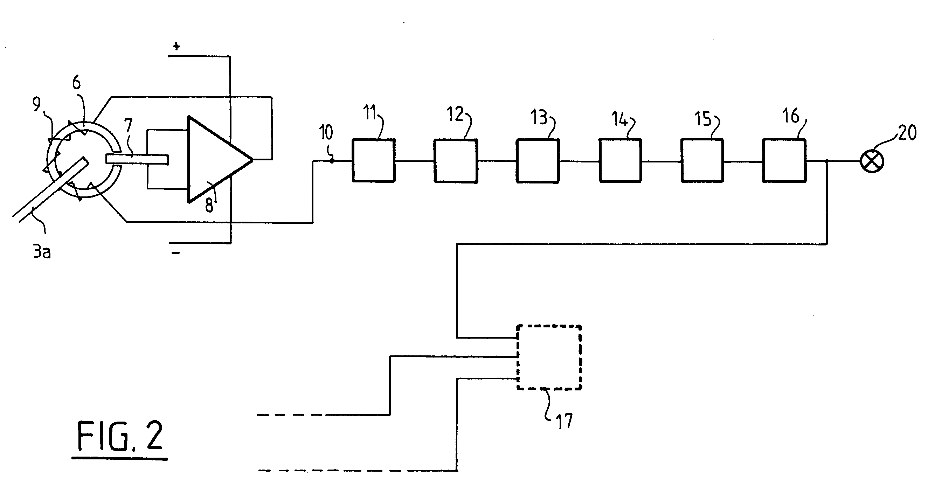

Sur chacun des conducteurs 3a, 3b et 3c est interposé un transducteur de mesure de courant à effet Hall désigné au dessin d'une façon générale par la référence 5. Ce dispositif comprend un noyau circulaire 6 qui entoure le conducteur (le conducteur 3a à la Figure 2) et dans l'entrefer duquel est disposé un élément Hall 7. Les sorties de cet élément sont connectées à un amplificateur 8 dont la sortie est connectée à l'une des bornes d'un enroulement 9. Ce dernier constitue le secondaire d'un transformateur dont le primaire est formé par le conducteur 3a. Lorsqu'un courant parcourt le conducteur 3a, il engendre dans le noyau 6 un champ magnétique détecté par l'élément 7. Le courant de sortie de cet élément est amplifié et envoyé dans le bobinage 9 qui fournit une énergie magnétisante s'opposant à celle due au courant traversant le conducteur 3a. Le courant secondaire augmente jusqu'à ce que son produit ampères/tour soit équivalent à celui du circuit primaire, ce qui se traduit par un flux nul dans l'entrefer du noyau 6. A ce moment, l'intensité du courant de sortie qu'on recueille en 10 est proportionnelle à l'intensité du courant traversant le conducteur 3a.

La sortie 10 du transducteur à effet Hall 5 est connectée à une série d'éléments comprenant un filtre passe-haut 11, un amplificateur 12, un redresseur 13 et, un filtre 14 dont la constante de temps est largement supérieure au temps périodique du signal. La tension continue obtenue à la sortie du filtre 14 est appliquée aux entrées différentielles d'un amplificateur 15 qui attaque un comparateur à seuil 16.

Les trois comparateurs 16 sont connectés par une porte logique "ET" 17 à un relais 18 associé à un voyant 19. Si les trois tensions à l'entrée des comparateurs 16 sont supérieures au seuil réglé, leurs sorties sont positives et le relais 18 s'enclenche et le voyant 19 s'allume. Par contre, si le signal sur une phase manque ou n'atteint pas le seuil prévu (on peut prévoir un voyant 20 le signalant), sa sortie devient négative et le relais 18 retombe; le voyant 19 s'éteint; le voyant 20 prévu à la sortie du comparateur 16 correspondant à la phase défaillante s'allume. Dans le cas où le moteur 4 entraîne une charge réversible, l'ouverture du relais 18 peut, par exemple, mettre en action un frein mécanique. On notera que, lorsque le moteur 4 est à l'arrêt, le dispositif permet de détecter la coupure de l'une des phases; en effet, à l'arrêt les trois phases sont parcourues par les variations alternatives des signaux de commutation, c'est-à-dire du bruit; le relais 18 est donc enclenché même à l'arrêt, s'il n'y a de coupure sur aucune des phases.

Il va de soi que la présente invention ne doit pas être considérée comme limitée au mode de réalisation décrit et représenté, mais en couvre, au contraire, toutes les variantes.

## Revendications

1. Dispositif de contrôle de phases d'un moteur triphasé commandé par un variateur électronique,
caractérisé en ce qu'il comprend :
- sur chaque phase un capteur (5) fournissant un signal fonction du bruit du courant de la phase et un comparateur à seuil (16) recevant ce signal
- une porte logique (17) fournissant un signal d'erreur lorsque le signal de sortie de l'un des comparateurs (16) présente un défaut
- et un relais de commande (18) actionné par cette porte logique.

2. Dispositif selon la revendication 1,
caractérisé en ce qu'il comporte un voyant (19) s'allumant quand le relais (18) s'enclanche.

3. Dispositif selon la revendication 1 ou 2,
caractérisé en ce que le capteur (5) comprend un capteur à effet Hall.

4. Dispositif selon l'une des revendications précédentes,
caractérisé en ce qu'il comprend pour chaque phase, en série entre la sortie (10) du capteur (5) et le comparateur (16), un filtre passe-haut (11), un amplificateur (12), un redresseur (13) et un filtre (14).

5. Dispositif selon la revendication 4,
caractérisé en ce qu'il comprend pour chaque phase un voyant (20) s'allumant en cas de défaillance de la phase concernée.
